# EUROPEAN PATENT APPLICATION

(11) **EP 3 528 505 A1**
(43) Date of publication of application: **21.08.2019**
(21) Application number: 18156813.0
(22) Date of filing: 14.02.2018
(51) Int. Cl.: H04N 21/462, H04N 21/434

(54) **APPARATUS AND METHOD FOR OPERATING A MEDIA DEVICE TO SELECT FROM PLURAL INSTANCES OF CONTENT FOR PLAY BACK**

(71) Applicant: Vestel Elektronik Sanayi ve Ticaret A.S., 45030 Manisa (TR)
(72) Inventor: YILMAZ, Evren Gökhan, 45030 Manisa (TR); ÖZTEKIN, Güner, 45030 Manisa (TR)
(74) Representative: Flint, Adam

(57) **Abstract**

A media device (101) is operated to play back broadcast content received by the media device (101). The media device (101) determines the availability of plural instances of the content being provided over one or more transmission media (105, 107, 109) and obtains information about each of the plural instances of the content being provided over the one or more transmission media (105, 107, 109). The media device (101) selects one of the plural instances of the content for play back based at least in part on the obtained information.

## Description

### Technical Field

The present disclosure relates to an apparatus and a method for operating a media device to play back broadcast content.

### Background

A media device, such as a television set, tablet computer, etc., is able to play back media content. The media content may be broadcast to the device over one of a plurality of different transmission media. Examples of transmission media over which media content can be provided include satellite, cable, terrestrial and the internet.

Media content received at the device may have different formats of content, such as "high definition" (HD) or "standard definition" (SD) for video. The content may also have different attributes, such as subtitles or audio description. These different versions of the same content may in general be provided over the same transmission medium or over different transmission media. It has in any event become commonplace for media content (including in particular television programmes) to be broadcast simultaneously over multiple different transmission media (e.g. both satellite and the internet, or over all of satellite, cable and terrestrial) and/or in different formats (e.g. both HD and SD). This enables the content to be received by a large number of users having different receiving devices or systems.

### Summary

According to a first aspect disclosed herein, there is provided a method of operating a media device to play back broadcast content received by the media device, the method comprising the media device:
determining availability of plural instances of the content being provided over one or more transmission media;
obtaining information about each of the plural instances of the content being provided over the one or more transmission media; and
selecting one of the plural instances of the content for play back based at least in part on the obtained information.

The information about each of the plural instances of the content may comprise timing information for at least some of the plural instances of the content, and the selecting one of the plural instances of the content may comprise determining the instance of content that is leading in time based on the timing information.

The timing information may be obtained by at least partially decoding each of the at least some of the plural instances to obtain timing information in the form of at least one timestamp for the instance of the content.

The timing information may be obtained by at least partially decoding at least one corresponding intra-coded (I) frame of each of the at least some of the plural instances of the content.

The timing information may be determined by extracting timing information from event information tables for each of the at least some of the plural instances of the content.

In an example, obtaining information about each of the plural instances of the content may comprise determining the quality of at least some of the plural instances of the content.

In an example, selecting one of the plural instances of the content may comprise comparing the quality of the at least some of the plural instances and selecting the instance with a highest quality.

In an example, the method may comprise the media device automatically selecting an alternative instance of the content if the current instance of the content becomes unavailable.

In an example, selecting one of the plural instances of the content may be based at least in part on a user preference received by the media device.

According to a second aspect disclosed herein, there is provided a media device for playing back broadcast content received by the media device, the media device being arranged to:
determine availability of plural instances of content being provided over one or more transmission media;
obtain information about each of the plural instances of the content being provided over the one or more transmission media; and
select one of the plural instances of the content for play back based at least in part on the obtained information.

The information about each of the plural instances of the content may comprise timing information for at least some of the plural instances of the content, and the media device may be arranged to select one of the plural instances of the content based on a determined instance of the content that is leading in time based on the timing information.

The media device may be arranged to at least partially decode each of the at least some of the plural instances to obtain timing information in the form of at least one timestamp for the instance of the content.

The media device may be arranged to at least partially decode at least one corresponding intra-coded (I) frame of each of the at least some of the plural instances of the content to obtain the timing information.

The media device may be arranged to determine the quality of at least some of the plural instances of the content.

The media device may be arranged to compare the quality of the at least some of the plural instances and select the instance with a highest quality.

### Brief Description of the Drawings

To assist understanding of the present disclosure and to show how embodiments may be put into effect, reference is made by way of example to the accompanying drawings in which:
Figure 1 shows schematically an example of a media device capable of displaying media content according to the present disclosure;
Figure 2 shows schematically an example of an MPEG transport stream and transport stream packet; and
Figure 3 shows a flow diagram of an example of a method according to the present disclosure.

### Detailed Description

It is common for a media device, such as a television set, personal computing device, media player, etc., to be able to receive media content over a plurality of different transmission media and/or in different formats. For example, a particular media device may be able to receive media content over one or more of satellite, cable, terrestrial and the internet, depending on for example the availability of the transmission medium in the location of the media device and any subscriptions or other fees paid by the user for access to the content. Therefore, it is possible that duplicates of the same media content may be received or may be receivable by the media device, even though the media device typically plays back only one instance of the content at any particular time. Even though the media content provided over multiple different transmission media may be a duplicate, there may be differences between the content. For example, the media content may be HD over one transmission medium and SD over another transmission medium. (Herein, HD means a relatively high video resolution and SD means a relatively low resolution. For example, a HD resolution may be 1920 x 1080 or higher such as 3840 x 2160, whereas a SD resolution may be 1280 x 720 or lower.) In another example, the same content may be provided over the same transmission medium (or plural transmission media) but in different formats, such as HD on one channel and SD on another channel on the same transmission medium. In another example, the media content may have English or other subtitles over one transmission medium and no subtitles over another transmission medium. A user of the media device may have a variety of different requirements or preferences for the delivery of media content for play back on the media device.

In examples disclosed herein, there is provided a method of operating a media device to play back broadcast content received by the media device, the method comprising determining availability of plural instances of the content being provided over one or more transmission media and obtaining information about each of the plural instances of the content being provided over the one or more transmission media. The method further comprises selecting one of the plural instances of the content for play back based at least in part on the obtained information.

A user of such a media device may be aware of duplicate channels from the same input source, for example, many television channels have an HD transmission and a SD transmission. A user may be able to switch between these channels dependent on their needs. However, media content may be delivered via many different transmission media to the media device. It would be difficult and impractical for a user to attempt to search through all the different transmission media for the media content that they desire. In examples disclosed herein, a media device can determine all available instances of media content from one or more transmission media. The media device can determine information about each instance of the content. The media device may automatically switch the user to the preferred instance. In another example, the user may be provided with a notification or menu showing the alternative instances of the content that are available.

As an example only, a user may be watching SD content via a satellite medium on a media device, but an internet transmission to the media device is providing the same content in HD. The media device can automatically detect that the media content is being provided by another transmission medium. The media device can determine that the content is being provided in HD. The media device may automatically switch the screen of the media device to the HD internet transmission. In another example, the user is notified of the alternative content and given the option to change to switch to it or stay with the original content transmission.

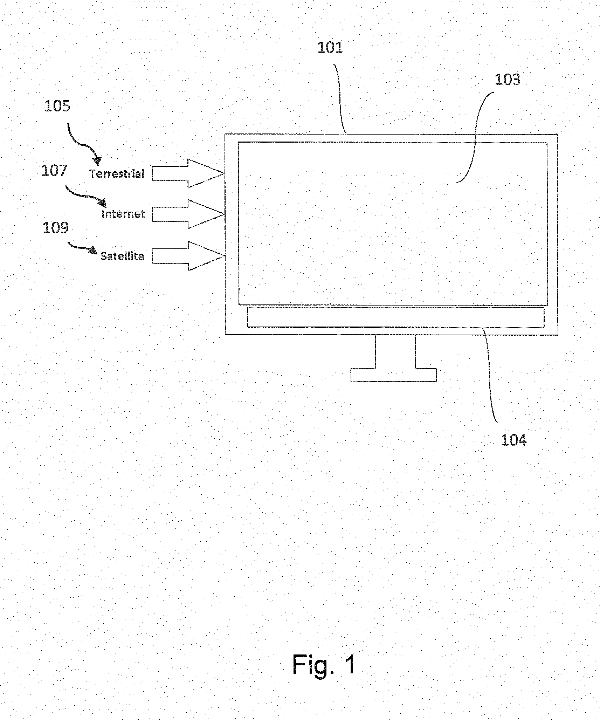

Referring now to the drawings, Figure 1 shows schematically an example of a media device 101 according to embodiments of the present disclosure. The media device 101 may be for example a television (including so called "smart televisions"), a display screen or panel, a set top box, a mobile or "smart" phone or other "smart" device, a personal computing device such as a laptop or desktop or tablet computer, a media player, etc. The media device 101 has a display 103 capable of displaying media content. The media device 101 also has one or more loudspeakers 104, and/or is connected to one or more external loudspeakers (not shown) for play back of audio. In other examples, the media device 101 may be a radio having internal or external loudspeakers.

The media device 101 is able to receive content over one or more transmission media. In the example shown in which the media device 101 is a television, the media device 101 is able to receive content over a terrestrial transmission medium 105, an internet transmission medium 107 and a satellite transmission medium 109. In other examples, the media device 101 may be able to receive content over different transmission media including transmission media not shown in Figure 1, such as, for example, a cable transmission medium. In the case that the media device 101 is a radio, the radio is capable of receiving broadcast audio over a number of transmission media, including for example (analogue) FM (frequency modulation), DAB (Digital Audio Broadcasting), and the internet.

The media device 101 may receive content over multiple transmission media 105, 107, 109 simultaneously or at least substantially simultaneously, but only provide content from one of the transmission media 105, 107, 109 to the display 103 and loudspeakers 104 at one time. Likewise, the media device 101 may receive content in different formats over the same transmission medium, but again only plays back one format at any particular time.

When the media device 101 does receive the same media content over at least two different transmission media 105, 107, 109 and/or in different formats on the same transmission medium then, in examples described herein, the media device 101 makes a selection as to which of the plural instances of the content should be played back. In effect, in examples the media device 101 determines which media content is the "most suitable" or the "best" for play back. There is a variety of different criteria which may be used in the determination of which media content is to be played back at any particular time.

In an example, the most suitable media content may be the content that is leading the other instances of the media content in time. This may be particularly useful if the media content is live media content (e.g. a live sporting event, such as a football match, etc.), as a viewer of the live media content may wish to watch the action as soon as it happens in real life as is practicable. It is has been found that different media content streams may lag behind or lead ahead of alternative media content streams. This may occur if the media content is available in different formats (such as for example HD and SD) over the same transmission medium and/or if the media content is available over different transmission media (whether or not the media content has the same format over the different transmission media). This difference in timing between content delivered over different transmission media and/or in different formats can lead to a problem whereby a first user, watching media content in close proximity to a second user (e.g. neighbouring houses) on different media devices and receiving their media content over a different transmission medium and/or in a different format from the second user, can hear the second user react to an event in the media content (e.g. audibly react with a cheer or scream). This reaction by the second user could occur before the first user sees the event happen on their media device. This could be due to the first user's media content having a timing lag in comparison to the second user's media content.

In another example, the media content that is selected for playback may be the media content with the highest quality. Often media content having video will be available to the media device 101 in both SD and HD (or even also ultra-high definition, UHD) with a user unaware of this duplication of media content. For example, if a user is watching SD media content it may be beneficial if the media device 101 switches to play back the HD format version in order to improve the user experience.

In further examples, the most suitable media content may be the content with the highest audio quality, the required subtitle language or the availability of audio description. Media content with higher quality audio may be preferable to media content with lower quality audio particularly if the media content is, for example, a musical performance or an orchestral recital or the like. Media content that is available with subtitles may be most suitable for a user with hard of hearing or deafness. Media content which is available with audio description may be most suitable for a user with a visual impairment.

The one or more criteria or preferences for the media content to be provided by the media device 101 may be stored in the media device 101. In other examples, it may be stored externally (e.g. stored on some remote server in "the cloud"). The criteria or preferences may be input by a user of the device 101. The criteria or preferences may have a default setting stored in the media device 101, which may be selectively overridden by the user if desired.

Some specific examples of detailed technical considerations for implementing aspects described herein will now be described.

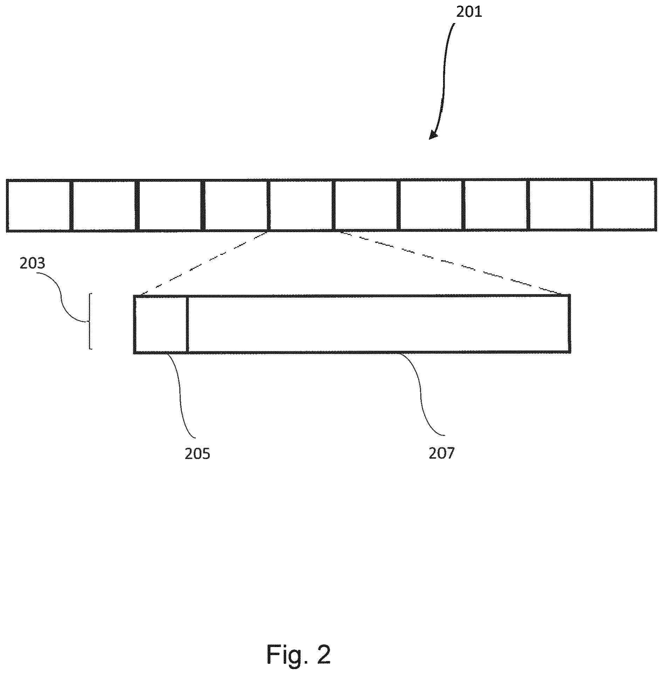

Media content received at the media device 101 may be received in the form of a Transport Stream 201 (TS), an example of which is shown schematically in Figure 2. Figure 2 shows a portion of the TS 201 which is composed of a series of transport packets 203. Each transport packet 203 comprises a transport packet header 205 and a transport packet payload 207. The TS 201 is a bit stream. The transport packet payloads 207 comprise information for recreating, for example, media content.

The TS 201 encapsulates a number of other sub-streams, often Packetized Elementary Streams (PES), which in turn wrap the main data stream of for example an MPEG (Moving Picture Experts Group) codec. The TS 201 may also encapsulate a number of non-MPEG codecs (such as AC3 or DTS audio, and MJPEG or JPEG 2000 video), text and pictures for subtitles, tables identifying the streams, and even broadcaster-specific information such as an electronic program guide.

PES is a specification in the MPEG-2 Part 1 (Systems) (ISO/IEC 13818-1) and ITU-T H.222.0 which defines carrying of elementary streams (usually the output of an audio or video encoder) in packets within MPEG program streams and MPEG transport streams. The elementary stream is packetized by encapsulating sequential data bytes from the elementary stream inside PES packet headers.

A typical method of transmitting elementary stream data from a video or audio encoder is to first create PES packets from the elementary stream data and then to encapsulate these PES packets inside TS packets 203. The TS packets 203 can be multiplexed and transmitted using broadcasting techniques, such as those used in an Advanced Television Systems Committee (ATSC) and Digital Video Broadcasting (DVB). TS packets 203 are normally 188 bytes in length, though the transmission medium may add additional information such as for error correction. The TS packet 203 comprises the 4 byte header 205 and the 184 byte data payload 207.

The header 205 may include timestamps such as a Programme Clock Reference (PCR), a Presentation Time Stamp (PTS) and a Decode Time Stamp (DTS).

The media device 101 is able to use one or more of the timestamps in the media content transport stream 201 in order to determine the leading media content from a plurality of media content instances. The media device 101 may determine the availability of the media content over the same transmission medium and/or the media content over a different transmission media 105, 107, 109 transmitting content to the media device 101. The media device 101 calls a content discovery function which can check all available transmission media 105, 107, 109 for the media content.

The media content may have attributes broadcast alongside the content itself, such as some description or name of the content (e.g. England-Turkey football match). This may be part of EPG or electronic program guide content that is made available to the media device 101. In an example, the content discovery function utilises the attributes of the media content in order to determine whether the same media content is being received from a plurality of different transmission media 105, 107, 109.

The media device 101 may decode the plurality of instances of the media content from the transmission media 105, 107, 109 using a decoder. The decoder may be required to only partially decode the media content. In other examples, there may be a plurality of decoders in the media device 101 which allows the multiple instances of the media content to be decoded in parallel. As the media content is decoded, in an example timestamps are identified from the headers of the data packets.

As discussed previously, the media content may be formed of a TS 201. A TS 201 needs timing information to make sure video and audio are displayed at the right time and in sync. Some example timestamps/timecodes include:
- PCR - Programme Clock Reference. The PCR is a reference clock which the decoder can use to keep track of all timing information and keep streams synchronised. If the PTS or DTS timestamps are corrupted, the decoder can use the PCR to recreate the corrupted timestamps. The PCR is essential for correct decoding of the Transport Stream
- PTS - Presentation Time Stamp. The PTS tells the decoder when to display or present a frame in the stream. The PTS is present for elementary streams such as video, audio and subtitles. The presentation timestamp (PTS) is a timestamp metadata field in an MPEG transport stream or MPEG program stream that is used to achieve synchronization of programs' separate elementary streams (for example video, audio, subtitles) when presented to the viewer.
- DTS - Decode Time Stamp. The DTS tells the decoder when to decode a frame in the stream. The DTS is present for elementary streams such as video, audio and subtitles. The DTS is slightly ahead of the PTS to allow the decoder time to decode the frame before the decoder needs to present it.

As the media content is decoded, the timestamps of the multiple instances of the media content are compared in order to determine which of the instances is leading the other instances. In examples, this is done by comparing the values of the PCR and/or the PTS and/or the DTS in the respective streams.

In another example, the leading media content can be determined by comparing the Intra-coded Frames (I-Frames) of the video frames of each instance of the media content. I-frames are frames or images that are coded by using information present only in the frame or image itself and without depending on information from other frames or images. I-frames provide a mechanism for random access into the compressed video data. In the H.264/MPEG-4 AVC standard in particular, the granularity of prediction types is brought down to the "slice level". A slice is a spatially distinct region of a frame that is encoded separately from any other region in the same frame. I-slices take the place of I-frames.

I-frames are the least compressible but do not require other video frames to decode. I-frames contain an entire image and are coded without reference to any other frame except (parts of) themselves. I-frames may be generated by an encoder to create a random access point (to allow a decoder to start decoding properly from scratch at that picture location).

The media device 101 comparing the I-frames of each instance of the media content allows the media device to determine the leading instance.

In another example, the leading media content can be determined by extracting timing information from Event Information Tables. Event Information Tables are used in digital video transmissions in accordance with for example Advanced Television Systems Committee (ATSC) and Digital Video Broadcasting (DVB). The Event Information Table (EIT) contains data concerning events, such as event name, start time, duration, etc. The media device 101 can therefore determine the leading instance of the media content from the timing information in the Event Information Tables of the content. In further examples, fingerprint data is entered into the media content to allow the media device 101 to compare timestamps and determine the leading instance.

In an example, the media device 101 can determine the instance of the media content with the highest quality by decoding the instances of the media content and comparing their quality. In another example, the attributes (e.g. name of media content) associated with the media content is analysed without decoding the media content as information regarding the quality of the media content may be broadcast with the content itself. In an example, two instances of the media content is provided by the same transmission medium, one instance in HD and one instance in SD. The media device 101 can determine that the media content is being provided in better video quality on a different channel of the same transmission medium and automatically select that channel so that the higher quality media content is played back at the media device 101. Alternatively or additionally, two instances of the media content, one instance in HD and one instance in SD, may be provided over different transmission media. The media device 101 can switch to the relevant transmission medium so as to play back using the HD media content transmitted over the transmission medium.

In another example, the media device 101 can determine which instance of the media content should be played back based on the quality of the audio in the media content. This may be useful particularly where the media content is music based, such as film of a concert or the like, or where the media device 101 is a radio. In the case of the audio content being provided in digital form, the quality of the instances of the media content can be determined based on the bitrate of the transmitted audio. The bitrate of the transmitted digital audio may be transmitted as metadata with the audio content and/or by the media device 101 decoding the instances of the media content and calculating the audio bitrate.

In the particular case that the media device 101 is a radio, then audio content provided by analogue radio (e.g. FM) may be better quality than instances provided digitally (e.g. DAB (Digital Audio Broadcasting) or over the internet). In this case, the bitrate of the digital audio transmission(s) may not need to be calculated and instead the radio media device 101 always selects FM as a first option if FM is available for the content. A "favourite" transmission medium (e.g. FM) may be set in user preferences or set as a default. If the media content is not being provided by analogue radio then the media device 101 may calculate a bit rate for the instances of the media content which may be provided digitally by, for example, internet radio or DAB. In this case, the media content with the highest bitrate may be selected.

In another example, the media device 101 is able to determine whether the instances have subtitles available, audio description available, etc. The media device 101 is able to decode the instances of the media content in order to determine subtitle and/or audio description information. The media device 101 may select the instance of the media content that can provide the subtitles, audio description, etc. as required. This again may be set by the user in preferences on the media device 101.

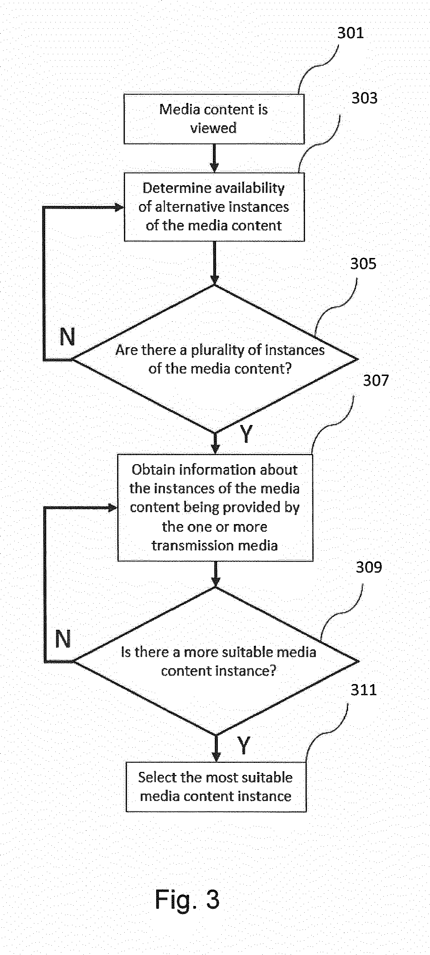

Figure 3 shows a flow chart of an example method according to embodiments of the present disclosure.

At 301, media content, such as for example a sporting event, is viewed on the display 103 of the media device 101. The media content may be received over one or more available transmission media 105, 107, 109 that provide content to the media device 101. The media content may be initially selected with a user input (e.g. the user selects a satellite television channel to watch the sporting event).

At 303, the media device 101 determines the availability of the media content (i.e. the same sporting event in this example) from alternative transmission media 105, 107, 109 transmitting content to the media device 101 and/or the media content in a different format from the same transmission medium. The media device 101 calls a content discovery function which can check all available transmission media 105, 107, 109 for any instances of the media content.

The media content may have attributes broadcast alongside the content itself, such as the name of the content (e.g. England-Turkey football match). The content discovery function utilises the attributes of the media content in order to determine whether the same media content is being received from a plurality of different transmission media 105, 107, 109 and/or is available in other formats on the same transmission medium. Once the content discovery function has completed determining availability of plural versions of the content, the content discovery function may compile a database or list with the different transmission media 105, 107, 109 that are providing the media content and/or the availability of the media content on more than one channel of a particular transmission medium. The database/list may be stored in data storage or memory.

At 305, the content discovery function has been completed and the media device 101 continues to 307 if there are a plurality of instances of the media content available. The media device 101 loops back to 303 if no alternative media content is found. The media device 101 may perform the search for alternative instances of the media content repeatedly with a set interval of time between each search, for example, search every 30 seconds or 1 minute or so.

At 307, the media device 101 obtains information about the media content instances being provided by the one or more transmission media 105, 107, 109 and/or available in other formats on the same transmission medium. This will typically include the transmission medium initially providing the media content as selected by the user. The information may include, for example, a timing of the media content, the resolution of video in the media content, the presence of and language of possible subtitles, audio quality, etc. The obtained information may be stored in the database/list with the relevant transmission media entry.

The media content attributes may also be stored in the database/list. The transmission media 105, 107, 109 providing the media content may be ordered in the database/list according to user preference.

At 309, the media device 101 determines whether there is a more suitable transmission medium or more suitable channel on a transmission medium providing the media content. This determination may be based on a variety of criteria as described above in detail. The criteria may include, for example, the content leading in time, the highest quality video content, the highest quality audio quality, the subtitle type, etc.

At 311, the media device 101 selects the most suitable media content from the determined list of transmission media and/or channels providing the media content. The selection is based, at least in part, upon the information obtained at 307. The user preference may also be used to determine the most suitable media content.

Once the most suitable media content has been selected, the media device 101 decodes the media content and provides it to the display 103 and/or the loudspeakers 104 as relevant for the user, by switching to the relevant transmission medium and/or channel providing the selected media content instance.

In an example of a variant, media content may be playing on the media device 101. Then the media content may cut out, due to for example an error with the transmission of the media content over that transmission medium (such as for example drop out in the transmission or in the reception for some reason). In this case, the media device 101 automatically changes the media content provided to the media device 101 to the next most suitable transmission medium that was determined at 309. This may be done by extracting the data stored in the database/list of the available transmission media 105, 107, 109 and/or channels providing the media content.

The method of Figure 3 may be performed by a processor, microprocessor, field-programmable gate array (FPGA), etc. A processor performing the steps of Figure 3 may be found inside the media device 101. The media device 101 may be, for example, a television set, a display screen or panel, a set top box, a mobile or "smart" phone or other "smart" device, a personal computing device such as a laptop or desktop or tablet computer, a media player, etc.

The examples shown may be implemented in hardware or software, logic, etc. Some aspects may be implemented by a microprocessor or other computing device. While aspects may be illustrated and described as flow charts, or using some other pictorial representation, it is well understood that these apparatus and methods disclosed may be implemented in hardware, software, etc.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of operating a media device to play back broadcast content received by the media device, the method comprising the media device:
determining availability of plural instances of the content being provided over one or more transmission media;
obtaining information about each of the plural instances of the content being provided over the one or more transmission media; and
selecting one of the plural instances of the content for play back based at least in part on the obtained information.

2. A method according to claim 1, wherein the information about each of the plural instances of the content comprises timing information for at least some of the plural instances of the content, and the selecting one of the plural instances of the content comprises determining the instance of content that is leading in time based on the timing information.

3. A method according to claim 2, wherein the timing information is obtained by at least partially decoding each of the at least some of the plural instances to obtain timing information in the form of at least one timestamp for the instance of the content.

4. A method according to claim 2 or claim 3, wherein the timing information is obtained by at least partially decoding at least one corresponding intra-coded (I) frame of each of the at least some of the plural instances of the content.

5. A method according to any of claims 2 to 4, wherein the timing information is determined by extracting timing information from event information tables for each of the at least some of the plural instances of the content.

6. A method according to any of claims 1 to 5, wherein obtaining information about each of the plural instances of the content comprises determining the quality of at least some of the plural instances of the content.

7. A method according to claim 6, wherein selecting one of the plural instances of the content comprises comparing the quality of the at least some of the plural instances and selecting the instance with a highest quality.

8. A method according to any of claims 1 to 7, comprising the media device automatically selecting an alternative instance of the content if the current instance of the content becomes unavailable.

9. A method according to any of claims 1 to 8, wherein selecting one of the plural instances of the content is based at least in part on a user preference received by the media device.

10. A media device for playing back broadcast content received by the media device, the media device being arranged to:
determine availability of plural instances of content being provided over one or more transmission media;
obtain information about each of the plural instances of the content being provided over the one or more transmission media; and
select one of the plural instances of the content for play back based at least in part on the obtained information.

11. A media device according to claim 10, wherein the information about each of the plural instances of the content comprises timing information for at least some of the plural instances of the content, and the media device is arranged to select one of the plural instances of the content based on a determined instance of the content that is leading in time based on the timing information.

12. A media device according to claim 11, wherein the media device is arranged to at least partially decode each of the at least some of the plural instances to obtain timing information in the form of at least one timestamp for the instance of the content.

13. A media device according to claim 11 or claim 12, wherein the media device is arranged to at least partially decode at least one corresponding intra-coded (I) frame of each of the at least some of the plural instances of the content to obtain the timing information.

14. A media device according to any of claims 10 to 13, wherein the media device is arranged to determine the quality of at least some of the plural instances of the content.

15. A media device according to claim 14, wherein the media device is arranged to compare the quality of the at least some of the plural instances and select the instance with a highest quality.
